# EUROPEAN PATENT SPECIFICATION

(11) **EP 2 507 583 B1**
(45) Date of publication and mention of the grant of the patent: **05.03.2014**
(21) Application number: 10795749.0
(22) Date of filing: 15.11.2010
(51) Int. Cl.: G01B 3/20, G01B 5/16

(54) **DEVICE FOR MEASURING MOORING CHAINS**
VORRICHTUNG ZUR MESSUNG VON ANKERKETTEN
DISPOSITIF PERMETTANT DE MESURER DES CHAÎNES DE MOUILLAGE

(30) Priority: 13.11.2009 GB 0919839
(43) Date of publication of application: 10.10.2012
(73) Proprietor: Film-Ocean Limited, Aberdeen, Aberdeenshire AB41 7TH (GB)
(72) Inventor: JENNEY, Scott, Darlington DL1 3JA (GB); MARTIN, Bernard, Aberdeenshire AB41 7TH (GB)
(74) Representative: Elsworth, Dominic Stephen
(86) International application number: PCT/GB2010/051903
(87) International publication number: WO 2011/058380

(56) References cited:
- DE-A1- 3 526 942
- FR-A1- 2 587 104
- GB-A- 2 338 786
- US-A1- 2004 060 189

## Description

### Field of the Invention

The invention relates to a measuring device; in particular to a measuring device for obtaining measurements from underwater structures such as subsea mooring chains. The invention also relates to a method of measuring an object and to a remotely operated vehicle (ROV) including a measuring device.

### Background of the Invention

Mooring chains support offshore installations such as floating platforms in the oil and gas industry. The mooring chains secure platforms to the sea bed and must withstand extreme forces and weather conditions.

If cracks, corrosion, bending or stretching of mooring chains are not detected, over time the entire mooring system could fail. The consequences of failure of the mooring system could be loss of station keeping that could lead to release of hydrocarbon, large scale oil pollution and loss of life.

The links of mooring chains may be checked by removing chains from the water and performing a visual inspection. This process is clearly very costly and time consuming. Therefore in situ inspections of the chain links using Remotely Operated Vehicles (ROVs) is increasingly favoured.

However, since each chain may be hundreds of metres in length, in situ inspections can be unreliable.

One prior art invention that seeks to overcome some of the problems associated with mooring chain inspection is described in GB2338786 (Hall). This document describes a device for inspection of subsea structures such as chains or pipes using images of the chain taken using two parallel cameras spaced at a precise distance apart. The device attaches to a mooring chain and each camera forms an image of the chain. The cameras are set a predetermined distance from each other and images are obtained simultaneously. The distance between chain links can be measured by comparing images of the chain and scale bars, which project into the field of view of the cameras, and hence chain stretching identified. Computerised digital image analysis is said to be used to compare images.

Devices of the type described in GB2338786 (Hall) arc expensive and rely on cameras recording a clear image of the scale bar and being measured and comparing the image results via a subsequent processing step. The Hall device requires the cameras to move and therefore the means by which the recorded image is transmitted must be capable of accommodating such movement.

Because the surfaces of subsea mooring chains accumulate a build up of marine growth, the chains need to be cleaned, such that the chain links themselves are visible, before accurate measuremenets can be taken using the device described in GB2338786 (Hall).

FR2587104 describes a foresters caliper that is used for measuring the length or length and diameter of logs in order to allow their internal volume to be estimated.

It would be beneficial to provide an improved device for measuring structures such as subsea mooring chains.

### Summary of the Invention

According to a first aspect or the invention there is provided a measuring device according to claim 1.

Preferably, the measuring device comprises a measuring means associated with each of the pair of arms.

The measuring means may include a display configured to indicate the measured distance. A camera may be aligned with the display and the field of view of the camera is preferably configured such that the display falls within said field of view and the measured elongate member falls outwith the said field of view.

The measuring means may include a vernier scale, and one part of the vernier scale may be attached to the carriage and one part to the arm.

The measuring means may include an electronic sensor configured to generate an electronic signal representative of the distance moved by the arm relative to the carriage. The measuring means may comprise a linear transducer, which may form part of an actuator. A recording means configured to receive and record the output of the sensor may be provided.

Preferably, the measuring device further includes actuator means adapted to move each arm with respect to the carriage. The actuator means may include a hydraulic ram. The actuator means may include individual actuators adapted to move a respective one of the arms with respect to the carriage.

Advantageously, the measuring device may further comprise a positioning apparatus connectable to an ROV, the positioning apparatus including a first linkage adapted to control roll of the device and a second linkage adapted to control pitch of the device.

The measuring device may further includes a docking camera, the field of view of the docking camera being configured to encompass a part of the elongate member to be measured when the device is in close proximity to the said elongate member.

Advantageously, the arms are configured to selectively engage a part of the elongate element and to bring the attachment element into engagement with another part of the elongate element.

The measuring device may further comprise a caliper adapted to measure the thickness of a part of the elongate member, and the caliper may be mounted on the attachment element. The caliper is Preferably is provided with measuring means configured to measure the distance between arms of the caliper. The measuring means will advantageously be of the type described above. Information recorded by the measuring means may be recorded by the recording means referred to above, or a separate recording means.

According to a second embodiment of the invention there is provided according to claim 15, a method of measuring an object.

The method may include the steps of:
i) bringing one of the arms of the pair into engagement with a first part of a first elongate member element;
ii) moving the so engaged arm towards the carriage until the attachment element engages with a second elongate member dement;
iii) bringing the other arm of the pair into engagement with a second part of the elongate member element.

Advantageously, the method includes the further step of measuring the extension of the first arm after step ii, and measuring the extension of the other arm after step iii.

Preferably, the method includes the further steps of:
iv) moving the first arm away from the first part of the first elongate member element;
v) moving the other arm of the pair towards the carriage until the attachment element engages with a third elongate member element.

The method may include the step (vi) of bringing the first arm back into engagement with the first part of the elongate member element.

Advantageously, the method includes the further steps of measuring the extension of the other arm after steps v, and measuring the extension of the first arm after step vi

In the method described above the first, second and third elongate member elements may be links of a chain.

According to a third aspect of the invention there is provided an ROV having attacked thereto a measuring device according to the first aspect of the invention.

Further preferred aspects of the invention are specified in the description which follows.

The invention provides a measuring device where measuring of the change in length of an elongate member, such as a chain, is achieved without using an image of the chain itself as a reference. Similarly, where linear transducer is used to generate an electronic signal representative of distance moved, there is no requirement to use an image of the chain itself as a reference. In the embodiment of the invention where measurement is achieved by capturing a view of a display of a measurement device, such as a vernier scale, the position of the camera can be fixed, thereby avoiding the requirement for electrical connections to the camera having to be capable of accommodating movement.

The positioning apparatus of the invention allows the measuring device to be accurately and easily position on an clongate clement by a remotely operated vehicle (RO).

### Brief Description of the Drawings

In the drawings, which illustrate preferred embodiments of a measuring device according to the invention, and which are by way of example:
Figure 1 is a front perspective view of one embodiment of the measuring device of the invention;
Figure 2 is a rear perspective view of the embodiment of the measuring device illustrated in Figure 1;
Figure 3 is a perspective view of the embodiment of the measuring device illustrated in Figure with the device inverted;
Figure 4 is a perspective view of the embodiment of the measuring device illustrated in Figure 1, showing the dial gauge of the invention;
Figure 5 is a perspective view of the measuring device illustrated in Figure 1 attached to a chain;
Figure 6 is a schematic representation of an additional part of a further embodiment of a measuring device according to the invention;
Figure 7 is a side view of a component of the part illustrated in Figure 6 from one side thereof; and
Figure 8 is a side view of the component illustrated in Figure 7 from the other side.

### Detailed Description of the Preferred Embodiments

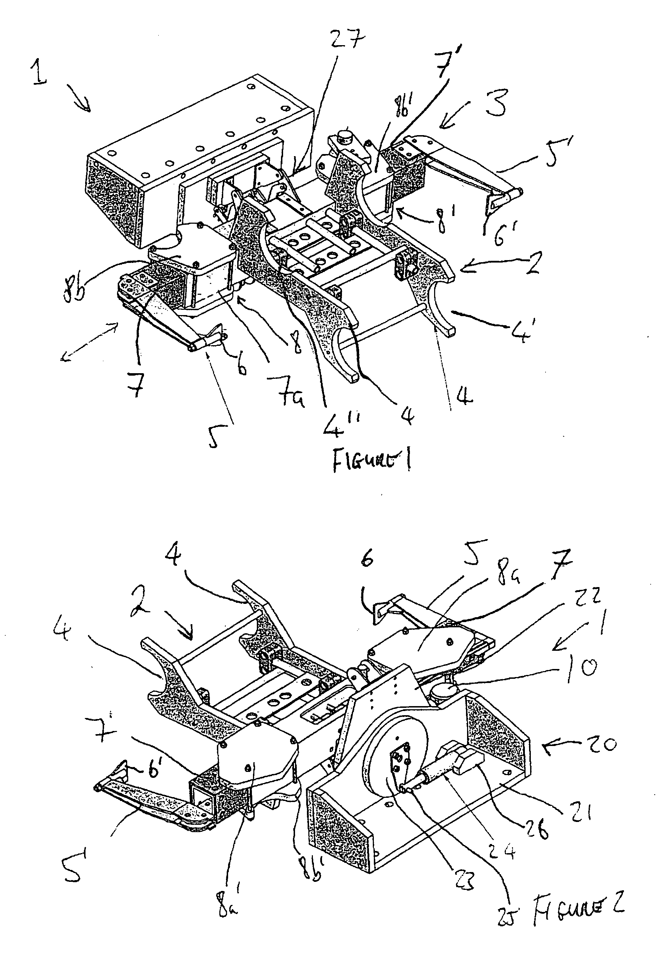

With reference to Figure 1, the measuring device 1 comprises a part 2 for attachment to a chain, a part 3 configured to measure the chain. The part 2 includes arms 4 each including elements 4', 4" at the ends thereof, which in use, engage a link 29 of a subsea chain. The elements 4', 4" are concave in the illustrated example, the curved outer surface of the link 29 seating in the elements 4', 4".

The part 3 includes calipers 5, 5', each caliper 5, 5' having at its distal end a leg 6, 6'.

Each calliper 5, 5' is attached to an arm 7, 7' that is axially slideable within a housing 7a, which in the present example comprises an aluminium box section element. The arms 4 are attached to the housing 7a. Mounted an the housing 7a are brackets 8, 8' formed by plates 8a, 8a' and 8b, 8b' secured to the housing by holes 8c, 8c'. The plates 8a, 8a' are preferably opaque.

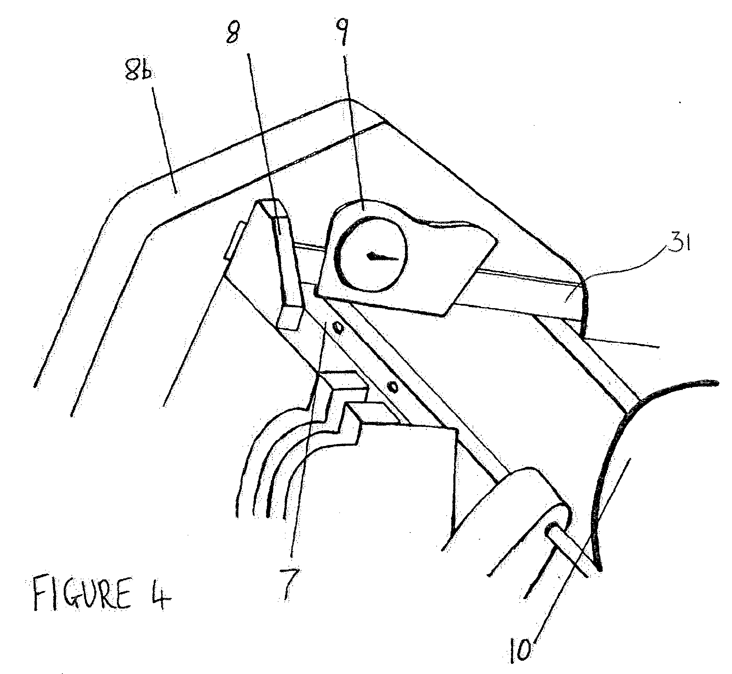

Each plate 8a, 8a' has mounted on its lower surface, a dial gauge 9, 9' which displays the distance moved by each caliper 5, 5'. The dial gauge 9, 9' forms part of a vernier scale associated with one of the callipers 5, 5'. As illustrated in Figure 4, each dial gauge 9, 9' is connected at one end to the slideable arm 7 via a link plate 31, which slides with a slideable arm 7, 7'.

The inspection device I further comprises cameras 10. The cameras 10 are fixed in position with respect to the housing 7a such that each records an image of one of the dial gauges 9 or 9'. Each camera 10 is is mounted on the lower plate 8b, 8b' of the brockets 8, 8'.

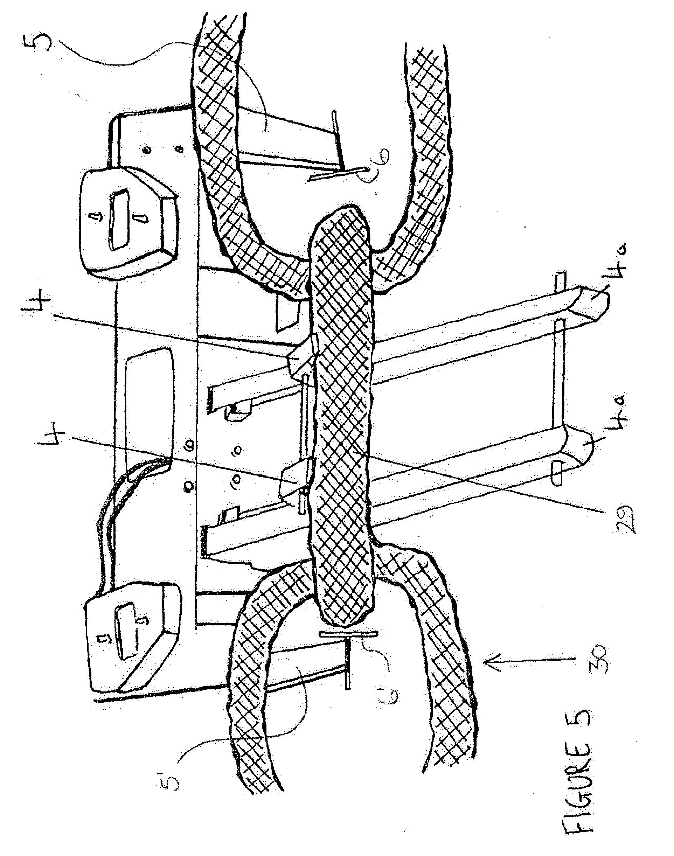

As illustrated in Figure 5, in use, the elements 4', 4" of the attachment portion 2 engage with a single link 29 of a mooring chain 30 and hold the measuring device 1 in position on the link 29. In the embodiment illustrated in Figure 5, the arms 4 include extension members 4a which assist the ROV operator in engaging with an identified link 29.

In this first position, the legs 6, 6' are located between adjacent links of the chain 30. To measure the link, the arms 7, 7' slide one at a time towards the link 29 until each leg 6, 6' abuts its respective end of the link 29 and is restricted from further movement.

At this point, the image recorded by the cameras 10 of each dial gauge 9, 9' shows the distance moved by each of the calipers 5 and 5' and thus the chain link sizes can be determined. The dial gauge may have a digital or analogue output.

Since the original or previously measured length of each chain link is known, any stretching or wear at the chain link will be highlighted.

The interlink distance at each end of the link 29 is the distance measured from the outer surface of the plates in which chain receiving elements 4, 4' are formed to the legs 6, 6'. Changes in interlink distance may indicate wear of the chain links.

The centre of the part 2 is aligned with the centre of the housing 7a, and the arms 7, 7' move towards and away from this centre point. The distance between the arms 4 of the part 2 is known. Hence, from this measurement, and the two interlink measurements, the link length can be calculated. An increase in link length measurement can indicate stretching of the link. In fact, to calculate the link length, both inter-link measurements are not required. With a single inter-link length, the distance between the arms 4, and the arm extension length for the second of the arms 7, 7' when it is engaged with an end of the link 29, the link length can be calculated with respect to one end of the link. By using both interlink measurements in the calculation of link length, the link length is measured from both ends of the link, and the two measurements can be compared. Any significant discrepancy may indicate a problem with the link.

The device may be used to determine the overall length of a link, i.e. the distance between the legs 6, 6'. Further, the dimension of each interlink of an individual link 29 may also be determined for each engagement of a link 29. When the link 29 is engaged by chain receiving elements 4, 4', one of the arms 6, 6' is brought into engagement with the outer edge of the curved part of the link 29. Actuation of the hydraulic ram connected to the first of the arms 6, 6' is continued to move the element 4, 4' into engagement with the opposite side of the interlink (which is the outer surface of the chain link adjacent the engaged chain link 29). The other hydraulic ram is then actuated to bring the second of the arms 6, 6' into engagement with the other end of the link 29. At this point the link length has been established with respect to one end of the link. The hydraulic ram powering the first of the arms 6, 6' is then extended away from the end of the link with which it was engaged. The hydraulic ram causing the second of the arms 6, 6' to slide is actuated until the element 4, 4' engages with the opposite side of the other interlink. The other of the arms is then retracted until it engages with the other end of the link 29. In this way, the dimensions of both upper and lower interlinks are established, and the link length is established from both ends of the link 29.

The hydraulic rams used to slide the arms 7, 7' are capable of producing up to a tonne of force. The force of the calipers 5, 5' contacting the link 29, cuts through soft marine growth to contact the metal of the chain. Therefore no pre-cleaning of chains is needed. In one embodiment, the legs 6, 6' may be shaped to facilitate cutting through marine growth.

The measuring device 1 also includes a carriage 20. This carriage provides for attachment of the inspection device to an ROV. The carriage includes a number of actuators which provide for the position of the arms 4 and calipers 5 to be manipulated such that the device may be attached to a chain in the manner described above. The carriage 20 comprises a first element 21 configured for attachment to an ROV, and a second element 22 attached to the first element 21 for relative rotation therebetween. In the example, the first and second elements 21, 22 are attached together by means of a slew ring 23. Relative rotation between the said elements is controlled by extending or contracting a hydraulic actuator 24, one end of which is attached to a bracket 26 connected to the first element and the other end of which is attached to a bracket 25 connected to the second element By virtue of this arrangement, roll of the measuring device 1 with respect to the ROV to which it is attached may be controlled.

The carriage 20 also includes a linkage 27 which provides for the pitch of the device 1 with respect of the ROV to be controlled. The linkage 27 is a four bar linkage, each bar being attached to the element 22 and the housing 7a. A hydraulic ram 28 extends between and is attached to the element 22 and the linkage. The pitch of the device 1 is determined by the extension of the hydraulic ram 28.

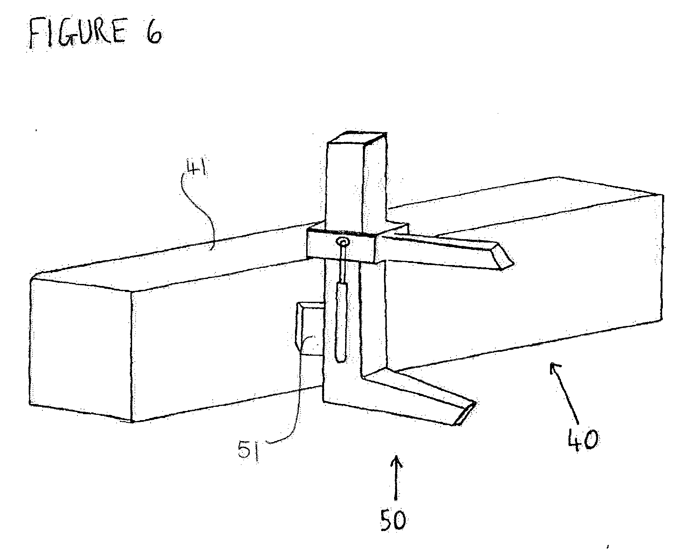

Referring now to Figures 6 to 8, there is shown an assembly 40 that includes a further caliper 50. In the illustrated example, the assembly includes a beam 41 which extends between and attaches to arms 4. The caliper 50 is attached to the beam 41 by a bracket 51. The caliper 50 includes jaws 52 and 53 which lie substantially parallel, and are slideable with respect to one another. The jaw 52 includes a part 52' extending perpendicularly to the jaw 52. The jaw 53 is slideably mounted on the pan 52'. An actuator 54 is provided to adjust the distance between the jaws. In the illustrated example, the actuator is a hydraulic ram comprising a piston 56 and cylinder 55 attached to the jaws 53 and 52 respectively by pins 56' and 55'.

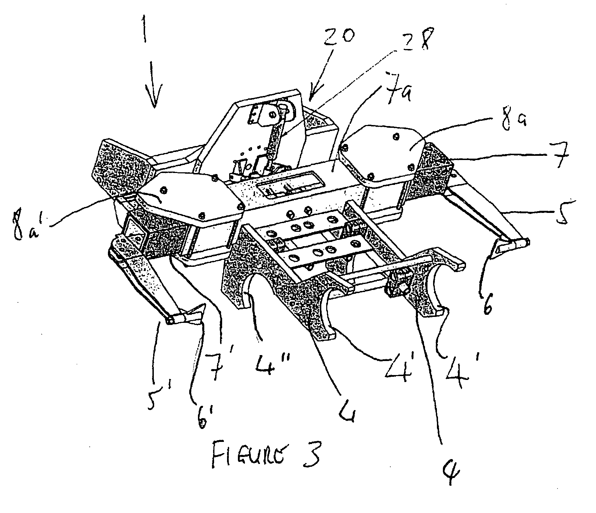

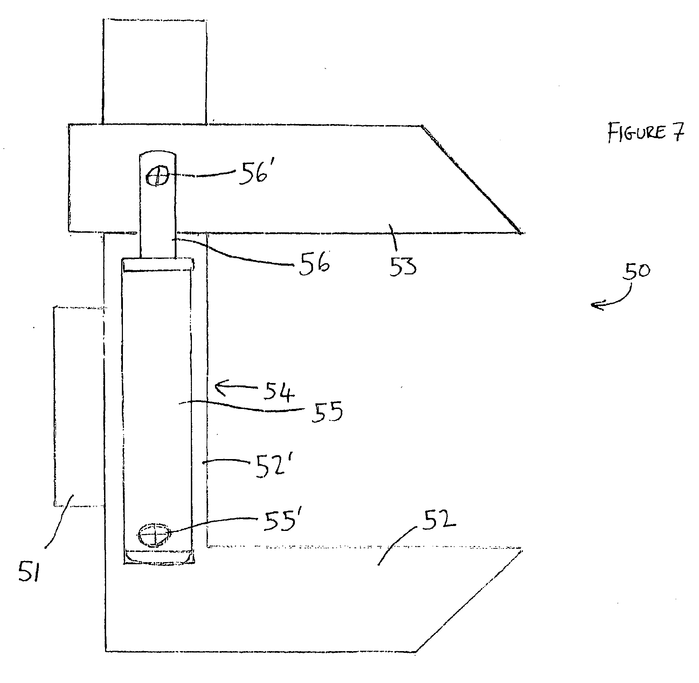

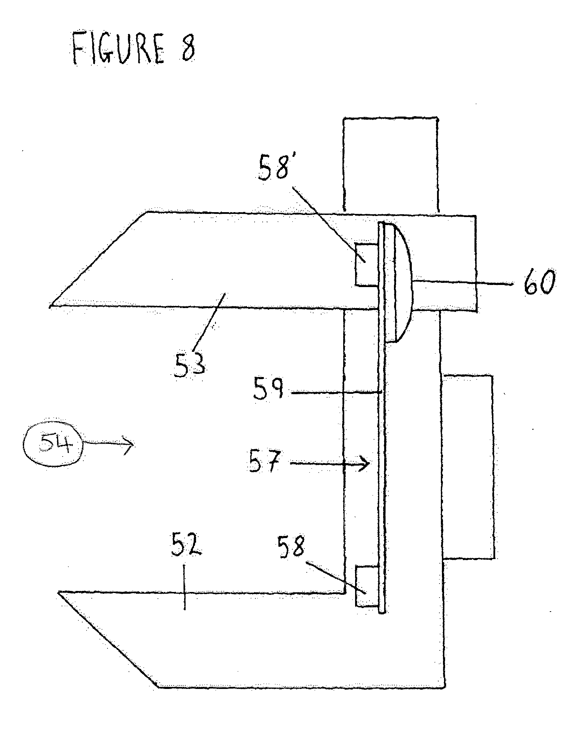

Referring now to Figure 8, which is a view of the calliper 54 from the opposite side to the Figure 7 view, it can be seen that a measuring means 57 in the form of a vernier is provided to measure the distance between the jaws 52 and 53. The measuring means 57 is attached to the jaws 52, 53 by mounts 58, 58'. The measuring means 57 includes a rod 59 which is operatively linked to a dial gauge 60. In the same way as described with reference to Figures 1 to 5, a camera (not shown in Figure 8) is aligned with the dial gauge.

The caliper 50 measures the thickness of the chain link to which the device attaches. In this way for each chain link measured, not only can link length be established, but also the link thickness.

Using the measuring device of the invention, it is possible to take real time measurement readings and no subsequent processing step is necessary. In an alternative embodiment, the measurements could be taken and transmitted without use of any cameras. For example, the device may be equipped with a transducer adapted to measure linear movement, with an electrical signal from the transducer being recorded. A linear transducer may form part of a hydraulic cylinder. In this way the recording of the desired messurements can be made in the course of moving arms 5, 5' or the jaws 52, 53 of calliper 50.

An additional benefit of the device is that it is small enough to be used with a small scale ROV (as small as 1m in length by 0.5m in width and height). Using a small scale ROV means that it is not necessary for a boat to be deploved near the site of the chain to be measured.

Rather than being configured to attach to an ROV, a measuring device 1 of the invention may be configured such that a diver may manoeuvre it in to position.

## Claims

1. A measuring device (1) arranged for measuring elongate members of underwater structures, the measuring device **characterised by**, an attachment element (2) configured to attach to a first part of an elongate member and a pair of arms (7, 7') each adapted to engage with respective second parts of the elongate member, wherein the attachment element (2) is connected to a housing (7a), and wherein the arms (7, 7') are each mounted on and moveable with respect to the housing (7a), and wherein at least one measuring means is associated with the pair of arms (7, 7'), the measuring means being arranged to measure the distance moved by the arms (7, 7') relative to the housing (7a).

2. A measuring device according to Claim 1, comprising a measuring means associated with each of the pair of arms.

3. A measuring device according to Claim 1 or 2, wherein the measuring means includes a display (9, 9') configured to indicate the measured distance.

4. A measuring device according to Claim 3, further comprising a camera (10) aligned with the display (9, 9') and wherein the field of view of the camera (10) is configured such that the display (9, 9') falls within said field of view and the measured elongate member falls outwit the said field of view.

5. A measuring device according to any preceding claim, wherein the measuring means includes a vernier scale, and wherein one part of the vernier scale is attached to the housing (7a) and one part to the arm.

6. A measuring device according to any preceding claim, wherein the measuring means includes an electronic sensor configured to generate an electronic signal representative of the distance moved by the arm (7, 7') relative to the housing(7a).

7. A measuring device according to Claim 6, further including a recording means configured to receive and record the output of the sensor.

8. A measuring device according to any preceding claim, further including actuator means adapted to move each arm (7, 7') with respect to the housing (7a).

9. A measuring device according to Claim 8, wherein the actuator means includes a hydraulic ram.

10. A measuring device according to Claim 8 or 9, wherein the actuator means includes individual actuators adapted to move a respective one of the arms (7, 7') with respect to the housing (7a).

11. A measuring device according to any preceding claim, wherein the arms (7, 7') are configured to selectively engage a part of the elongate element and to bring the attachment element (2) into engagement with another part of the elongate element.

12. A measuring device according to any preceding claim, further comprising:
a caliper (50) adapted to measure the thickness of a part of the elongate member; or
a caliper (50) adapted to measure the thickness of a part of the elongate member,
wherein the caliper (50) is mounted on the attachment element; or
a caliper (50) adapted to measure the thickness of a part of the elongate member,
wherein the caliper (50) is provided with measuring means configured to measure the distance between arms of the caliper (50); or
a caliper (50) adapted to measure the thickness of a part of the elongate member,
wherein the caliper (50) is mounted on the attachment element, and wherein the caliper (50) is provided with measuring means configured to measure the distance between arms of the caliper (50).

13. A measuring device (1) according to any preceding claim, further comprising:
a positioning apparatus connectable to an ROV, the positioning apparatus including a first linkage (21-26) adapted to control roll of the device and a second linkage (27) adapted to control pitch of the device (1);
and/or
a docking camera, the field of view of the docking camera being configured to encompass a part of the elongate member to be measured when the device is in close proximity to the said elongate member.

14. A measuring device as claimed in Claim 13 attached to an ROV.

15. A method of measuring an object comprising the steps of attaching a measuring device (1) as claimed in any of Claims 1 to 13 to an elongate member and recording the output of the measuring means.

## Patentansprüche

1. Messvorrichtung (1) zum Messen von länglichen Elementen von Unterwasserkonstruktionen, wobei die Messvorrichtung **gekennzeichnet ist durch** ein Befestigungselement (2), das zum Anbringen an einem ersten Teil eines länglichen Elements konfiguriert ist, und ein Paar Arme (7, 7'), die jeweils zum Eingreifen in jeweilige zweite Teile des länglichen Elements ausgelegt sind, wobei das Befestigungselement (2) mit einem Schlitten (20) zum Anbringen der Messvorrichtung an einem ferngesteuerten Fahrzeug (ROV) verbunden ist und wobei die Arme (7, 7') jeweils an dem Schlitten (20) montiert und relativ zu diesem beweglich sind, und wobei wenigstens ein Messmittel mit dem Paar Arme (7, 7') assoziiert ist, wobei die Messmittel zum Messen der Distanz ausgelegt sind, um die sich die Arme (7, 7') relativ zum Schlitten (20) bewegt haben.

2. Messvorrichtung nach Anspruch 1, die ein Messmittel umfasst, das mit jedem aus dem Paar Arme assoziiert ist.

3. Messvorrichtung nach Anspruch 1 oder 2, wobei das Messmittel ein Display (9, 9') aufweist, das zum Anzeigen der gemessenen Distanz konfiguriert ist.

4. Messvorrichtung nach Anspruch 3, die ferner eine Kamera (10) umfasst, die mit dem Display (9, 9') ausgerichtet ist, und wobei das Sichtfeld der Kamera (10) so konfiguriert ist, dass das Display (9, 9') innerhalb des genannten Sichtfelds liegt und das gemessene längliche Element außerhalb des genannten Sichtfelds liegt.

5. Messvorrichtung nach einem vorherigen Anspruch, wobei das Messmittel eine Vernier-Skala aufweist und wobei ein Teil der Vernier-Skala am Schlitten und ein Teil am Arm befestigt ist.

6. Messvorrichtung nach einem vorherigen Anspruch, wobei das Messmittel einen elektronischen Sensor beinhaltet, der zum Erzeugen eines elektronischen Signals konfiguriert ist, das für die Distanz repräsentativ ist, um die sich der Arm (7, 7') relativ zum Schlitten (20) bewegt hat.

7. Messvorrichtung nach Anspruch 6, die ferner ein Aufzeichnungsmittel zum Empfangen und Aufzeichnen des Ausgangs des Sensors aufweist.

8. Messvorrichtung nach einem vorherigen Anspruch, die ferner Betätigungsmittel zum Bewegen jedes Arms (7, 7') mit Bezug auf den Schlitten (20) aufweist.

9. Messvorrichtung nach Anspruch 8, wobei das Betätigungsmittel einen Hydraulikstößel beinhaltet.

10. Messvorrichtung nach Anspruch 8 oder 9, wobei das Betätigungsmittel individuelle Stellantriebe beinhaltet, die zum Bewegen von jeweils einem der Arme (7, 7') mit Bezug auf den Schlitten (20) ausgelegt sind.

11. Messvorrichtung nach einem vorherigen Anspruch, wobei die Arme (7, 7') so konfiguriert sind, dass sie selektiv in einen Teil des länglichen Elements eingreifen und das Befestigungselement (2) mit einem anderen Teil des länglichen Elements in Eingriff bringen.

12. Messvorrichtung nach einem vorherigen Anspruch, die ferner Folgendes umfasst:
einen Messschieber (50) zum Messen der Dicke eines Teils des länglichen Elements; oder
einen Messschieber (50) zum Messen der Dicke eines Teils des länglichen Elements, wobei der Messschieber (50) an dem Befestigungselement montiert ist; oder
einen Messschieber (50) zum Messen der Dicke eines Teils des länglichen Elements, wobei der Messschieber (50) mit Messmitteln versehen ist, die zum Messen der Distanz zwischen Armen des Messschiebers (50) konfiguriert sind; oder
einen Messschieber (50) zum Messen der Dicke eines Teils des länglichen Elements, wobei der Messschieber (50) an dem Befestigungselement montiert ist und wobei der Messschieber (50) mit Messmitteln versehen ist, die zum Messen der Distanz zwischen Armen des Messschiebers (50) konfiguriert sind.

13. Messvorrichtung (1) nach einem vorherigen Anspruch, die ferner Folgendes umfasst:
eine Positioniervorrichtung, die mit einem ROV verbunden werden kann, wobei die Positioniervorrichtung ein erstes Gestänge (21-26) zum Steuern von Rollbewegungen der Vorrichtung und ein zweites Gestänge (27) zum Steuern von Stampfbewegungen der Vorrichtung (1) ausgelegt ist;
und/oder
eine Docking-Kamera, wobei das Sichtfeld der Docking-Kamera so konfiguriert ist, dass es einen Teil des zu messenden länglichen Elementes umgibt, wenn sich die Vorrichtung in unmittelbarer Nähe zu dem genannten länglichen Element befindet.

14. Messvorrichtung nach Anspruch 13, die an einem ROV befestigt ist.

15. Verfahren zum Messen eines Objekts, das die Schritte des Befestigens einer Messvorrichtung (1) nach einem der Ansprüche 1 bis 13 an einem länglichen Element und des Aufzeichnens des Ausgangs der Messmittel beinhaltet.

## Revendications

1. Dispositif de mesure (1) agencé de façon à mesurer des éléments allongés de structures sous-marines, le dispositif de mesure étant **caractérisé par** un élément d'attache (2) lequel est configuré pour être attaché à une première partie d'un élément allongé et une paire de bras (7, 7') dont chacun est conçu pour se solidariser avec des deuxièmes parties respectives de l'élément allongé, cas dans lequel l'élément d'attache (2) est raccordé à un support (20) afin d'attacher le dispositif de mesure à un engin télécommandé (ROV), et cas dans lequel chacun des bras (7, 7') est monté sur le support (20) et est apte à être détaché de ce dernier, et cas dans lequel au moins un moyen de mesure est associé à la paire de bras (7, 7'), le moyen de mesure étant agencé de façon à mesurer la distance parcourue par les bras (7, 7') par rapport au support (20).

2. Dispositif de mesure selon la revendication 1, comprenant un moyen de mesure lequel est associé à chaque bras de la paire de bras.

3. Dispositif de mesure selon la revendication 1 ou 2, le moyen de mesure englobant un affichage (9, 9') configuré pour indiquer la distance mesurée.

4. Dispositif de mesure selon la revendication 3, comprenant en outre une caméra (10) qui est alignée avec l'affichage (9, 9') et cas dans lequel le champ de vision de la caméra (10) est configuré de telle sorte que l'affichage (9, 9') se trouve dans les limites dudit champ de vision et l'élément allongé mesuré se trouve à l'extérieur dudit champ de vision.

5. Dispositif de mesure selon l'une quelconque des revendications précédentes, le moyen de mesure incluant une échelle à vernier, et cas dans lequel une partie de l'échelle à vernier est attachée au support et une partie au bras.

6. Dispositif de mesure selon l'une quelconque des revendications précédentes, le moyen de mesure incluant un capteur électronique lequel est configuré de façon à générer un signal électronique qui est représentatif de la distance parcourue par le bras (7, 7') par rapport au support (20).

7. Dispositif de mesure selon la revendication 6, comprenant en outre un moyen d'enregistrement configuré pour recevoir et pour enregistrer la sortie du capteur.

8. Dispositif de mesure selon l'une quelconque des revendications précédentes, comprenant en outre des moyens d'actionneur conçus pour déplacer chaque bras (7, 7') par rapport au support (20).

9. Dispositif de mesure selon la revendication 8, les moyens d'actionneur incluant un vérin hydraulique.

10. Dispositif de mesure selon la revendication 8 ou 9, les moyens d'actionneur incluant des actionneurs individuels conçus pour déplacer un bras respectif des bras (7, 7') par rapport au support (20).

11. Dispositif de mesure selon l'une quelconque des revendications précédentes, les bras (7, 7') étant configurés pour se solidariser sélectivement avec une partie de l'élément allongé et pour amener l'élément d'attache (2) en solidarisation avec une autre partie de l'élément allongé.

12. Dispositif de mesure selon l'une quelconque des revendications précédentes, comprenant en outre :
un pied à coulisse (50) conçu pour mesurer l'épaisseur d'une partie de l'élément allongé ; ou
un pied à coulisse (50) conçu pour mesurer l'épaisseur d'une partie de l'élément allongé, cas dans lequel le pied à coulisse (50) est monté sur l'élément d'attache ; ou
un pied à coulisse (50) conçu pour mesurer l'épaisseur d'une partie de l'élément allongé, cas dans lequel le pied à coulisse (50) est pourvu de moyens de mesure configurés pour mesurer la distance entre des bras du pied à coulisse (50) ; ou
un pied à coulisse (50) conçu pour mesurer l'épaisseur d'une partie de l'élément allongé, cas dans lequel le pied à coulisse (50) est monté sur l'élément d'attache, et cas dans lequel le pied à coulisse (50) est pourvu de moyens de mesure configurés pour mesurer la distance entre des bras du pied à coulisse (50).

13. Dispositif de mesure (1) selon l'une quelconque des revendications précédentes, comprenant en outre :
un appareil de positionnement apte à être raccordé à un ROV, l'appareil de positionnement incluant une première tringlerie (21-26) conçue pour piloter le roulis du dispositif et une deuxième tringlerie (27) conçue pour piloter le tangage du dispositif (1) ;
et/ou
une caméra d'amarrage, le champ de vision de la caméra d'amarrage étant configuré de sorte à englober une partie de l'élément allongé destiné à être mesuré lorsque le dispositif se trouve à proximité étroite dudit élément allongé.

14. Dispositif de mesure selon la revendication 13, lequel est attaché à un ROV.

15. Procédé de mesure d'un objet comprenant les étapes consistant à attacher un dispositif de mesure (1), selon l'une quelconque des revendications 1 à 13, à un élément allongé et à enregistrer la sortie du moyen de mesure.
